# EUROPÄISCHE PATENTSCHRIFT

(11) **EP 3 193 071 B1**
(45) Veröffentlichungstag und Bekanntmachung des Hinweises auf die Patenterteilung: **11.07.2018**
(21) Anmeldenummer: 16151641.4
(22) Anmeldetag: 18.01.2016
(51) Int. Cl.: F16P 3/14

(54) **SICHERHEITSSYSTEM**
SAFETY SYSTEM
SYSTEME DE SECURITE

(43) Veröffentlichungstag der Anmeldung: 19.07.2017
(73) Patentinhaber: SICK AG, 79183 Waldkirch (DE)
(72) Erfinder: Brunner, Fabio, 79100 Freiburg (DE)

(56) Entgegenhaltungen:
- WO-A1-2011/090485
- WO-A2-2008/110597
- DE-U1- 20 208 788

## Beschreibung

Die vorliegende Erfindung betrifft ein Sicherheitssystem gemäß Anspruch 1 sowie ein Verfahren mit einem Sicherheitssystem gemäß Anspruch 8.

Bei dem Sicherheitssystem mit mindestens einem mobilen Schlüsselgerät mit einer Auswerteeinheit und einer Schlüsselstation mit einer Aufnahme für das Schlüsselgerät, wobei mindestens ein räumlich begrenzter Zugangsbereich mit einer Zugangsstation für eine Anlage angeordnet ist, ist es vorgesehen, dass die Anlage von Bedienpersonen oder Servicepersonen betreten werden muss, beispielsweise um Störungen zu entfernen oder im Falle der Serviceperson, um die Anlage zu warten.

Bei der Anlage handelt es sich um eine Anlage mit Teilen, die eine gefahrbringende Bewegung ausführen, die für Personen eine Gefahr darstellen. Die Personen sind vor der gefahrbringenden Bewegung zu schützen.

Die Anlage kann aktiviert werden, wenn sich keine Personen im Bereich der Anlage befindet. Die Anlage muss jedoch deaktiviert werden, wenn sich Personen im Bereich der Anlage befinden.

Die DE 202 08 788 U1 offenbart eine Personenschutzeinrichtung gemäß dem Oberbegriff der Ansprüche 1 und 8 mit einer an der Person zuführenden Erkennungseinrichtung und einer Basisstation, die sich an einer Maschine befindet, wobei die Erkennungseinrichtung als Transponder mit einem ersten Empfänger und einem ersten Sender ausgebildet ist, und die Basisstation einen ein Signal aussendenden zweiten Sender aufweist, wobei der Transponder beim Empfang des Signal ein Antwortsignal aussendet, und dass die Basisstation einen das Antwortsignal empfangenden zweiten Empfänger aufweist, und der zweite Empfänger mit einer Steuereinrichtung verbunden ist.

Die WO 2011/090485 A1 offenbart Sicherheitssystem mit einem Arbeitsbereich mit einer Umfassung und gefährlichen automatisierten Maschinen innerhalb der Umfassung, wobei der Zugang von Arbeitern zu dem Arbeitsbereich innerhalb der Umfassung durch einen oder mehrere gesteuerte Zugangspunkte gesteuert wird. Weiter ist mindestens eine Sicherheitsarbeitszelle innerhalb der Umfassung vorhanden, wobei jede Sicherheitsarbeitszelle keine gefährlichen automatisierten Maschinen innerhalb oder außerhalb der Sicherheitsarbeitszelle aufweist.

Eine Aufgabe der Erfindung besteht darin, dass eine Anlage nur dann aktiviert werden kann, wenn sich keine Personen in einem gefahrbringenden Bereich bzw. einem Sicherheitsbereich der Anlage befinden.

Die Aufgabe wird gemäß Anspruch 1 gelöst durch ein Sicherheitssystem mit mindestens einer Überprüfungsstation, mit mindestens einem mobilen Schlüsselgerät mit einer Auswerteeinheit und einer Schlüsselstation mit einer Aufnahme für das Schlüsselgerät, wobei mindestens ein räumlich begrenzter Zugangsbereich mit einer Zugangsstation für eine Anlage angeordnet ist, wobei die Überprüfungsstation ortfest angeordnet ist, wobei das Schlüsselgerät zum Lesen von Daten von mindestens einer Überprüfungsstation innerhalb eines Sicherheitsbereiches der Anlage ausgebildet ist, wobei die Daten Identifizierungsdaten für die Überprüfungsstation umfassen und wobei das mobile Schlüsselgerät eine Schnittstelle aufweist, mittels der die Daten drahtlos von der Überprüfungsstation zu dem Schlüsselgerät übertragbar sind, wobei die Überprüfungsstation nur über den Zugangsbereich zugänglich ist, so dass der Zugangsbereich von einer Person mit dem Schlüsselgerät vor dem Erreichen der Überprüfungsstation und nach dem Verlassen der Überprüfungsstation passierbar ist, wobei die Daten des Schlüsselgeräts an die Schlüsselstation übertragbar sind, wobei die Anlage aktiviert bzw. freigeschaltet ist, wenn das mindestens ein mobile Schlüsselgerät in der Schlüsselstation ist und die Anlage deaktiviert bzw. blockiert ist, wenn mindestens ein Schlüsselgerät von der Schlüsselstation entfernt ist.

Die Aufgabe wird weiter gelöst mit einem Verfahren mit einem Sicherheitssystem mit mindestens einem mobilen Schlüsselgerät mit einer Auswerteeinheit und einer Schlüsselstation mit einer Aufnahme für das Schlüsselgerät, wobei mindestens ein räumlich begrenzter Zugangsbereich mit einer Zugangsstation für eine Anlage angeordnet ist, wobei das Schlüsselgerät Daten von mindestens einer Überprüfungsstation innerhalb eines Sicherheitsbereiches der Anlage ausliest, wobei die Daten Identifizierungsdaten für die Überprüfungsstation umfassen und wobei das mobile Schlüsselgerät eine Schnittstelle aufweist, mittels der die Daten drahtlos von der Überprüfungsstation zu dem Schlüsselgerät übertragen werden, wobei die Überprüfungsstation nur über den Zugangsbereich zugänglich ist, so dass der Zugangsbereich von einer Person mit dem Schlüsselgerät vor dem Erreichen der Überprüfungsstation und nach dem Verlassen der Überprüfungsstation passiert werden muss, wobei die Daten des Schlüsselgeräts an die Schlüsselstation übertragen werden, wobei die Anlage aktiviert bzw. freigeschaltet wird, wenn alle mobilen Schlüsselgeräte in der Schlüsselstation sind und die Anlage deaktiviert bzw. blockiert wird, wenn mindestens ein Schlüsselgerät von der Schlüsselstation entfernt wird.

Bei dem Sicherheitssystem handelt es sich um ein Sicherheitssystem gemäß Maschinensicherheit beispielsweise gemäß der Norm EN/ISO 13849-1 bzw. der Norm EN/IEC 62061, die beispielsweise den Rahmen für funktionale Sicherheit von sicherheitsbezogenen elektrischen Steuerungssystemen und deren Untersystemen an Maschinen bereit stellt.

Das Schlüsselgerät gemäß der Erfindung kann sehr einfach ausgebildet sein. Es handelt sich beispielsweise um ein handliches Gerät, das problemlos von einer Person getragen bzw. mitgeführt werden kann. Optional weist das Schlüsselgerät Bedienelemente und mindestens ein Anzeigeelement auf.

Weiter weist das Schlüsselgerät eine Auswerteeinheit auf. Die Auswerteeinheit ist beispielsweise durch einen Mikrocontroller gebildet. Weiter weist das Schlüsselgerät einen Speicher auf, um Daten auf dem Schlüsselgerät abzuspeichern.

Die Schlüsselstation ist außerhalb des Sicherheitsbereiches angeordnet. Die Schlüsselstation nimmt das mindestens eine Schlüsselgerät in einer Aufnahme auf. Bei der Aufnahme kann es sich beispielsweise um ein Fach oder ein Steckfach handeln. Die Schlüsselstation ist dazu ausgebildet, das Schlüsselgerät auszulesen und die Daten des Schlüsselgerätes in einer Auswerteeinheit auszuwerten. Die Schlüsselstation ist weiter dazu ausgebildet, die Anlage direkt oder indirekt zu beeinflussen, also die Anlage zu aktivieren oder zu deaktivieren.

Der Zugangsbereich ist ein räumlich begrenzter Zugangsbereich mit einer Zugangsstation, beispielsweise einem Tor oder einer Tür. Nur durch diesen Zugangsbereich ist der Sicherheitsbereich der Anlage zugänglich. Es können auch mehrere Zugangsbereiche angeordnet sein. Gerade bei sehr großen Anlagen mit beispielsweise mehreren Sicherheitsbereichen kann dies sinnvoll sein.

Die Zugangsstation kann beispielsweise elektronische Mittel, wie beispielsweise einen elektronischen Türschalter aufweisen, wodurch überprüfbar ist, ob der Zugangsbereich geöffnet wurde.

Bei der Anlage kann es sich beispielsweise um eine Industrieanlage zur Herstellung von Produkten handeln. Beispielsweise handelt es sich hierbei um einen Teil einer Produktionsanlage für Automobile. Bei der Anlage kann es sich auch um einen Teil einer Maschine oder um eine Anlage mit mehreren Maschinen handeln. Die Anlage weist einen Sicherheitsbereich auf, der nicht von Personen betreten werden darf, wenn die Anlage aktiv ist, da die Person durch Teile der Anlage gefährdet werden kann. Beispielsweise handelt es sich bei der Anlage um einen oder mehrere Roboter, deren gefährlicher Wirkungsbereich innerhalb des Sicherheitsbereiches liegt.

Die Überprüfungsstation ist innerhalb des Sicherheitsbereiches angeordnet. Die Überprüfungsstation ist dabei ortsfest angeordnet, so dass diese nicht entfernt werden kann. Die Überprüfungsstation ist beispielsweise in der Anlage integriert.

Die Überprüfungsstation enthält mindestens Daten zur Identifizierung, die über eine Schnittstelle drahtlos von dem Schlüsselgerät abgerufen werden können. Bei der Schnittstelle handelt es sich bevorzugt um eine Funkschnittstelle. Optional kann es sich bei der Schnittstelle jedoch auch um eine optische Schnittstelle handeln.

Gemäß der Erfindung muss das Schlüsselgerät immer von der Person mitgeführt werden, um die Überprüfungsstation zu erreichen. Würde die Person das Schlüsselgerät nicht mitführen, kann die Anlage auch nicht wieder aktiviert werden. Nur wenn das Schlüsselgerät an der Überprüfungsstation Daten abrufen oder lesen kann, ist eine spätere Aktivierung der Anlage, nämlich nach Verlassen des Sicherheitsbereiches und nach Rückgabe des Schlüsselgerätes in der Schlüsselstation möglich. Hierzu wird von der Überprüfungsstation beispielsweise eine Ortskennung oder eine Stationskennung an das Schlüsselgerät übermittelt bzw. durch das Schlüsselgerät von der Überprüfungsstation gelesen.

Die Überprüfung des Schlüsselgerätes an der Überprüfungsstation kann automatisch erfolgen. D. h. wenn sich die Person der Überprüfungsstation auf einen bestimmten Mindestabstand genähert hat, werden die Daten der Überprüfungsstation automatisch von dem Schlüsselgerät gelesen.

Die Person, die das Schlüsselgerät mit sich führt, muss optional mit dem Schlüsselgerät selbst an der Überprüfungsstation eine Prüfung vornehmen. Dazu kann beispielsweise vorgesehen sein, dass von der Person beispielsweise eine Aktion, beispielsweise ein Betätigen einer Taste an dem Schlüsselgerät durchgeführt werden muss. Dadurch ist gewährleistet, dass die Überprüfungsstation durch das Schlüsselgerät nicht automatisch überprüft wird, sondern immer eine aktive Handlung der Person notwendig ist, um diese zu überprüfen.

Gemäß der Erfindung ist durch die Schlüsselstation immer bekannt, wie viele Personen sich in der Anlage bzw. im Sicherheitsbereich befinden. Beispielsweise kann an der Schlüsselstation einfach festgestellt werden, ob mindestens ein Schlüsselgerät fehlt und falls ja, wie viele Schlüsselgeräte fehlen. Nur wenn alle vorgesehenen Schlüsselgeräte in oder an der Schlüsselstation vorhanden sind, kann die Anlage aktiviert werden.

Die Überprüfungsstation kann ebenfalls sehr einfach ausgeführt sein. Die Überprüfungsstation weist im einfachsten Fall einen Speicher und eine Schnittstelle zur Datenbereitstellung auf.

Optional sind mehrere Überprüfungsstationen vorgesehen. Insbesondere bei großen Anlagen bzw. großen Sicherheitsbereichen bzw. große Anlagen mit einer Mehrzahl von Sicherheitsbereichen sind mehrere Überprüfungsstationen vorgesehen. Dabei kann vorgesehen sein, dass das Schlüsselgerät mindestens an einer Überprüfungsstation geprüft werden muss. Jedoch kann es auch vorgesehen sein, dass ein Schlüsselgerät an mehreren Überprüfungsstationen geprüft werden muss. Optional kann es auch vorgesehen sein, dass das Schlüsselgerät an mehreren Überprüfungsstationen in einer bestimmten Reihenfolge überprüft werden muss.

Die Kommunikation zwischen dem Schlüsselgerät und der Überprüfungsstation kann unidirektional oder bidirektional stattfinden. Im einfachsten Fall genügt ein einfaches Lesen der Daten der Überprüfungsstation. Jedoch kann es auch vorgesehen sein, dass von dem Schlüsselgerät Daten an die Überprüfungsstation geschrieben werden.

Optional ist es vorgesehen, dass die Schlüsselgeräte nur von autorisierten Personen aus der Schlüsselstation entnommen werden können. Beispielsweise müssen sich die autorisierten Personen wie Bedienpersonen oder Servicepersonen mit Hilfe einer elektronischen Identitätskarte oder mit Hilfe anderer Identifikationsmitteln an der Schlüsselstation anmelden, um ein Schlüsselgerät zu erhalten. Bei der Entnahme des Schlüsselgerätes wird beispielsweise von der Schlüsselstation eine Startkennung an das Schlüsselgerät gesendet.

Die Schlüsselgeräte können dabei auch bestimmten Personen zugewiesen sein, so dass ein bestimmtes Schlüsselgerät nur von einer bestimmten Person aufgenommen bzw. mitgenommen werden kann.

In Weiterbildung der Erfindung weist das Schlüsselgerät mindestens ein RFID-Lesegerät auf, insbesondere ein RFID-Schreib-/Lesegerät und die Überprüfungsstation weist mindestens einen RFID-Transponder auf.

Die Überprüfungsstation ist dadurch sehr einfach ausgeführt, nämlich nur mit einem einfachen, preiswerten RFID-Transponder.

Das RFID-Lesegerät weist eine Antennenanordnung zur Kommunikation mit der Überprüfungsstation auf, welche als RFID-Transponder ausgebildet ist, wobei der Transponder mindestens eine Spule zur Wechselwirkung mit der Antennenanordnung des RFID-Lesergeräts umfasst.

RFID-Systeme (Radio Frequency Identification) werden in Sender/Empfänger-Systemen zum automatischen und berührungslosen Identifizieren und/oder Lokalisieren von RFID-Transpondern mit Radiowellen verwendet. Ein RFID-System umfasst typischerweise zunächst den RFID-Transponder (auch als "Tag" oder "Funketikett" bezeichnet), der eine Antenne umfasst und sich am oder in der Überprüfungsstation befindet. Er umfasst in der Regel einen kennzeichnenden Identifizierungsdaten-Code, der über die Antennenanordnung von dem RFID-Lesegerät des RFID-Systems (auch als "Transceiver" bezeichnet) abgefragt werden kann. Das RFID-Lesegerät umfasst dazu die Antennenanordnung und einen Transceiverschaltkreis (z. B. der EM4095-Chip der Firma EM Microelectronics) zum Auslesen dieser Kennung von dem RFID-Transponder. Zum Auslesen der Kennung von dem RFID-Transponder erzeugt das RFID-Lesegerät typischerweise magnetische Wechselfelder, um Signale an den RFID-Transponder zu übertragen. Der RFID-Transponder ist dazu ausgebildet, nach Erhalt eines entsprechenden Signals vom RFID-Lesegerät ein Daten, insbesondere die Kennung, umfassendes Signal als Antwort an das RFID-Lesegerät zurückzusenden, welches dieses mit der Auswerteeinheit auswertet und weiterverarbeitet.

Bei RFID-Systemen erzeugt das RFID-Lesegerät magnetische Wechselfelder, die nicht nur zum Übertragen der Daten vorgesehen sind, sondern auch dazu dienen können, den RFID-Transponder mit Energie zu versorgen.

Ein RFID-System hat damit den Vorteil, dass der RFID-Transponder keine eigene Stromversorgung benötigt und daher flexibel eingesetzt werden kann. Der RFID-Transponder bezieht seine Energie über Funkwellen bzw. Radiowellen aus dem RFID-Lesegerät. Der RFID-Transponder wird über die Antennenanordnung des RFID-Lesegeräts angesprochen und antwortet dem RFID-Lesegerät mit einer in dem RFID-Transponder abgespeicherten Information. Die vom Transponder des RFID-Systems übertragene Information wird von der Antennenanordnung empfangen und kann anschließend in der Auswerteeinheit ausgewertet werden. Die gespeicherte Information auf dem Transponder enthält mindestens eine Kennung, nämlich die Identifizierungsdaten, die den RFID-Transponder identifiziert.

Da die Erkennung des RFID-Transponders über Funkwellen erfolgt, ist das System sehr robust gegenüber Umwelteinflüssen. Daher kann das RFID-Lesesystem mit dem RFID-Transponder in sehr rauen Umgebungen eingesetzt werden, beispielsweise in Industrieumgebungen, wo Schmierstoffe verwendet werden und es beispielsweise zu einem hohen Verschmutzungsgrad kommen kann.

Da die Erkennung des RFID-Transponders über Funkwellen erfolgt, ist im Unterschied zu einer optischen Lösung keine Sichtverbindung zwischen dem Schlüsselgerät und der Überprüfungsstation notwendig. Daher können Schlüsselgerät und Überprüfungsstation vollständig gekapselt werden, um diese vor schädlichen Umwelteinflüssen zu schützen.

In Weiterbildung der Erfindung ist die Zugangsstation des Zugangsbereichs verriegelbar und nur mit dem Schlüsselgerät passierbar.

Dadurch wird ein unbefugter Zugang verhindert und nur eine zulässige Person, welche nämlich im Besitz des Schlüsselgerätes ist, kann den Sicherheitsbereich betreten.

Dadurch wird die Sicherheit für Personen erhöht, da der Sicherheitsbereich nicht mehr unabsichtlich betreten werden kann. Dadurch wird auch eine Verfügbarkeit der Anlage erhöht. Beispielsweise befindet sich an der Zugangsstation eine elektronische Zuhaltung als Verriegelung, die den Zugangsbereich automatisch freigibt, falls die Person das Schlüsselgerät mit sich führt.

In einer besonders bevorzugten Ausführung der Erfindung wird bei einer Entnahme des Schlüsselgeräts aus der Schlüsselstation im Schlüsselgerät ein Zeitgeber mit einem ersten Zeitwert gestartet.

Damit wird gewährleistet, dass die Person den Sicherheitsbereich innerhalb einer vorgeschriebenen Zeit wieder verlassen hat. Wird diese Zeit nicht eingehalten, kann beispielsweise eine Warnungsmeldung erfolgen, um die betreffende Person zu suchen.

Gemäß einer bevorzugten Weiterbildung der Erfindung wird beim Erreichen der Überprüfungsstation der Zeitgeber überprüft und falls der erste Zeitwert unterschritten ist, ein gültiges Erreichen der Überprüfungsstation im Schlüsselgerät signalisiert und gespeichert und falls der erste Zeitwert überschritten wird, ein nicht gültiges Erreichen der Überprüfungsstation im Schlüsselgerät signalisiert und gespeichert. Dabei wird von dem Schlüsselgerät die Ortkennung bzw. die Stationskennung mit dem ersten Zeitwert verknüpft.

Ist die Zeit überschritten, kann die Anlage nicht gestartet werden. Die Person wird aufgefordert die Routine erneut zu starten. Die Person entnimmt hierzu erneut das Schlüsselgerät aus der Schlüsselstation, wobei erneut ein erster Zeitwert gesetzt wird. Die Person muss die Überprüfungsstation erneut innerhalb einer ersten Zeit aufsuchen.

In Weiterbildung der Erfindung wird beim Erreichen der Überprüfungsstation durch das Schlüsselgerät in dem Schlüsselgerät ein Zeitgeber mit einem zweiten Zeitwert gestartet.

Damit wird weiterhin gewährleistet, dass die Person den Sicherheitsbereich innerhalb einer vorgeschriebenen Zeit wieder verlassen hat. Wird dieser zweite Zeitwert nicht eingehalten, kann beispielsweise eine Warnungsmeldung erfolgen, um die betreffende Person zu suchen.

In Weiterbildung der Erfindung wird beim Erreichen der Schlüsselstation der zweite Zeitwert überprüft und falls der zweite Zeitwert unterschritten ist, ein gültiges Erreichen der Schlüsselstation im Schlüsselgerät signalisiert und gespeichert und falls der zweite Zeitwert überschritten wird, ein nicht gültiges Erreichen der Schlüsselstation im Schlüsselgerät signalisiert und gespeichert. In jedem Fall erhält das Schlüsselgerät an der Schlüsselstation ein Stoppsignal, wodurch die Startkennung wieder gelöscht bzw. zurückgesetzt wird.

Ist die Zeit überschritten, kann die Anlage nicht gestartet werden. Die Person wird aufgefordert die Routine erneut zu starten. Die Person entnimmt hierzu erneut das Schlüsselgerät aus der Schlüsselstation, wobei erneut ein erster Zeitwert gesetzt wird. Die Person muss die Überprüfungsstation erneut innerhalb des ersten Zeitwertes aufsuchen und die Schlüsselstation innerhalb des zweiten Zeitwertes aufsuchen.

In einer alternativen Ausführungsform ist es vorgesehen, dass das Schlüsselgerät mindestens ein RFID-Transponder aufweist und die Überprüfungsstation mindestens ein RFID-Lesegerät aufweist. Dabei werden die Daten durch die Überprüfungsstation von dem Schlüsselgerät gelesen und ggf. Daten auf das Schlüsselgerät geschrieben. Gemäß dieser Lösung kann das Schlüsselgerät sehr einfach aufgebaut werden und die Überprüfungsstationen prüfen, ob ein Schlüsselgerät sich in der Nähe der Überprüfungsstation befindet.

Die Erfindung wird nachstehend auch hinsichtlich weiterer Vorteile und Merkmale unter Bezugnahme auf die beigefügte Zeichnung anhand von Ausführungsbeispielen erläutert. Die Figur der Zeichnung zeigt in:

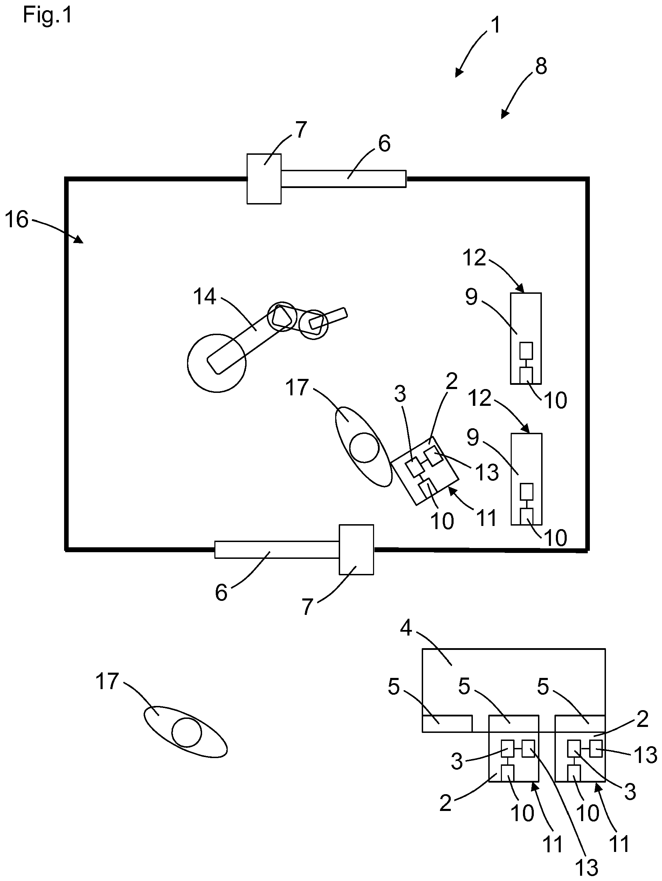

- Figur 1: ein Sicherheitssystem gemäß vorliegender Erfindung.

In den nachfolgenden Figuren sind identische Teile mit identischen Bezugszeichen versehen.

Figur 1 zeigt ein Sicherheitssystem 1 mit mindestens einem mobilen Schlüsselgerät 2 mit einer Auswerteeinheit 3 und einer Schlüsselstation 4 mit einer Aufnahme für das Schlüsselgerät 2. Das Sicherheitssystem 1 ist von oben in einer Draufsicht dargestellt.

Es ist mindestens ein räumlich begrenzter Zugangsbereich 6 mit einer Zugangsstation 7 für eine Anlage 8 angeordnet, wobei das Schlüsselgerät 2 zum Lesen von Daten von mindestens einer Überprüfungsstation 9 innerhalb eines Sicherheitsbereiches 16 der Anlage 8 ausgebildet ist, wobei die Daten Identifizierungsdaten für die Überprüfungsstation 9 umfassen.

Das mobile Schlüsselgerät 2 weist eine Schnittstelle 10 auf, mittels der die Daten drahtlos von der Überprüfungsstation 9 zu dem Schlüsselgerät 2 übertragbar sind.

Die Überprüfungsstation 9 ist nur über den Zugangsbereich 6 zugänglich, so dass der Zugangsbereich 6 von einer Person 17 mit dem Schlüsselgerät 2 vor dem Erreichen der Überprüfungsstation 9 und nach dem Verlassen der Überprüfungsstation 9 passierbar ist, wobei die Daten des Schlüsselgeräts 2 an die Schlüsselstation 4 übertragbar sind.

Die Anlage 8 ist aktiviert bzw. freigeschaltet, wenn alle mobilen Schlüsselgeräte 2 in der Schlüsselstation 4 sind und die Anlage 8 ist deaktiviert bzw. blockiert, wenn mindestens ein Schlüsselgerät 2 von der Schlüsselstation 4 entfernt ist, wie in Figur 1 dargestellt.

Bei dem Schlüsselgerät 2 handelt sich beispielsweise um ein handliches Gerät, das problemlos von einer Person 17 getragen bzw. mitgeführt werden kann. Optional weist das Schlüsselgerät 2 Bedienelemente und mindestens ein Anzeigeelement auf.

Weiter weist das Schlüsselgerät 2 die Auswerteeinheit 3 auf. Die Auswerteeinheit 3 ist beispielsweise durch einen Mikrocontroller gebildet. Weiter weist das Schlüsselgerät einen Speicher auf, um Daten auf dem Schlüsselgerät 2 abzuspeichern.

Die Schlüsselstation 4 ist außerhalb des Sicherheitsbereiches 16 angeordnet. Die Schlüsselstation 4 nimmt das mindestens eine Schlüsselgerät 2 in einer Aufnahme 5 auf. Bei der Aufnahme 5 kann es sich beispielsweise um ein Fach oder ein Steckfach handeln. Die Schlüsselstation 4 ist dazu ausgebildet, das Schlüsselgerät 2 auszulesen und die Daten des Schlüsselgerätes 2 in einer Auswerteeinheit auszuwerten. Die Schlüsselstation 4 ist weiter dazu ausgebildet, die Anlage 8 direkt oder indirekt zu beeinflussen, also die Anlage 4 zu aktivieren oder zu deaktivieren. Beispielsweise weist die Anlage einen Roboter 14 auf.

Der Zugangsbereich 6 ist ein räumlich begrenzter Zugangsbereich 6 mit einer Zugangsstation 7, beispielsweise einem Tor oder einer Tür. Nur durch diesen Zugangsbereich 6 ist der Sicherheitsbereich 16 der Anlage zugänglich. Es können auch mehrere Zugangsbereiche 6 angeordnet sein. Gerade bei sehr großen Anlagen mit beispielsweise mehreren oder großen Sicherheitsbereichen 16 kann dies sinnvoll sein.

Die Zugangsstation 7 kann beispielsweise elektronische Mittel wie beispielsweise einen elektronischen Türschalter aufweisen, wodurch überprüfbar ist, ob der Zugangsbereich geöffnet wurde.

Bei der Anlage 8 kann es sich beispielsweise um eine Industrieanlage zur Herstellung von Produkten handeln. Die Anlage 8 weist einen Sicherheitsbereich 16 auf, der nicht von Personen 17 betreten werden darf, wenn die Anlage 8 bzw. der Roboter 14 der Anlage 8 aktiv ist, da die Personen 17 durch Teile der Anlage 8 gefährdet werden können. Beispielsweise handelt es sich bei der Anlage 8 um einen oder mehrere Roboter 14, deren gefährlicher Wirkungsbereich innerhalb des Sicherheitsbereiches 16 liegt.

Die Überprüfungsstation 9 ist innerhalb des Sicherheitsbereiches 16 angeordnet. Die Überprüfungsstation 9 ist dabei ortsfest angeordnet, so dass diese nicht entfernt werden kann.

Die Überprüfungsstation 9 enthält mindestens Daten zur Identifizierung, die über eine Schnittstelle 10 drahtlos von dem Schlüsselgerät 2 abgerufen werden können. Bei der Schnittstelle 10 handelt es sich bevorzugt um eine Funkschnittstelle.

Gemäß Figur 1 muss das Schlüsselgerät 2 immer von der Person 17 mitgeführt werden, um die Überprüfungsstation 9 zu erreichen. Würde die Person das Schlüsselgerät 2 nicht mitführen, kann die Anlage 8 auch nicht wieder aktiviert werden. Nur wenn das Schlüsselgerät 2 an der Überprüfungsstation 9 Daten abrufen oder lesen kann, ist eine spätere Aktivierung der Anlage 8, nämlich nach Verlassen des Sicherheitsbereiches 16 und nach Rückgabe des Schlüsselgerätes 2 in der Schlüsselstation 4, möglich.

Die Überprüfung des Schlüsselgerätes 2 an der Überprüfungsstation 9 kann automatisch erfolgen. D. h. wenn sich die Person der Überprüfungsstation 9 auf einem bestimmten Mindestabstand genähert hat, werden die Daten der Überprüfungsstation 9 automatisch von dem Schlüsselgerät 2 gelesen.

Die Person, die das Schlüsselgerät 2 mit sich führt, muss optional mit dem Schlüsselgerät selbst an der Überprüfungsstation 9 eine Prüfung vornehmen. Dazu kann beispielsweise vorgesehen sein, dass von der Person 17 beispielsweise eine Aktion, beispielsweise ein Betätigen einer Taste an dem Schlüsselgerät 2 durchgeführt werden muss. Dadurch ist gewährleistet, dass die Überprüfungsstation 9 durch das Schlüsselgerät 2 nicht automatisch überprüft wird, sondern immer eine aktive Handlung der Person 17 notwendig ist, um diese zu überprüfen.

Gemäß Figur 1 ist durch die Schlüsselstation 4 immer bekannt, wie viele Personen 17 sich in der Anlage 8 bzw. im Sicherheitsbereich 16 befinden. Gemäß Figur 1 befindet sich eine Person 17 in der Anlage 16. Beispielsweise kann an der Schlüsselstation 4 einfach festgestellt werden, ob mindestens ein Schlüsselgerät 2 fehlt und falls ja, wie viele Schlüsselgeräte 2 fehlen. Nur wenn alle vorgesehenen Schlüsselgeräte 2 in oder an der Schlüsselstation 4 vorhanden sind, kann die Anlage 8 aktiviert werden.

Die Überprüfungsstation 9 weist im einfachsten Fall einen Speicher und eine Schnittstelle 10 zur Datenbereitstellung auf.

Optional sind gemäß Figur 1 mehrere Überprüfungsstationen 9 vorgesehen. Dabei kann vorgesehen sein, dass das Schlüsselgerät 2 mindestens an einer Überprüfungsstation 9 geprüft werden muss. Jedoch kann es auch vorgesehen sein, dass ein Schlüsselgerät 2 an mehreren Überprüfungsstationen 9 geprüft werden muss. Optional kann es auch vorgesehen sein, dass das Schlüsselgerät 2 an mehreren Überprüfungsstationen 9 in einer bestimmten Reihenfolge überprüft werden muss.

Die Kommunikation zwischen dem Schlüsselgerät 2 und der Überprüfungsstation 9 kann unidirektional oder bidirektional stattfinden. Im einfachsten Fall genügt ein einfaches Lesen der Daten der Überprüfungsstation 9. Jedoch kann es auch vorgesehen sein, dass von dem Schlüsselgerät 2 Daten an die Überprüfungsstation 9 geschrieben werden.

Gemäß Figur 1 ist es optional vorgesehen, dass die Schlüsselgeräte 2 nur von autorisierten Personen 17 aus der Schlüsselstation 4 entnommen werden können. Beispielsweise müssen sich die autorisierten Personen 17 wie Bedienpersonen oder Servicepersonen mit Hilfe einer elektronischen Identitätskarte oder mit Hilfe anderer Identifikationsmitteln an der Schlüsselstation 4 anmelden, um ein Schlüsselgerät 2 zu erhalten.

Die Schlüsselgeräte 2 können dabei auch bestimmten Personen 17 zugewiesen sein, so dass ein bestimmtes Schlüsselgerät 2 nur von einer bestimmten Person 17 aufgenommen bzw. mitgenommen werden kann.

Gemäß Figur 1 weist das Schlüsselgerät 2 mindestens ein RFID-Lesegerät 11 auf, insbesondere ein RFID-Schreib-/Lesegerät und die Überprüfungsstation 9 weist mindestens einen RFID-Transponder 12 auf.

Gemäß Figur 1 ist die Zugangsstation 7 des Zugangsbereichs 6 optional verriegelbar und nur mit dem Schlüsselgerät 2 passierbar. Beispielsweise befindet sich an der Zugangsstation 7 eine elektronische Zuhaltung als Verriegelung, die den Zugangsbereich 6 automatisch freigibt, falls die Person 17 das Schlüsselgerät 2 mit sich führt.

Gemäß Figur 1 wird bei einer Entnahme des Schlüsselgeräts 2 aus der Schlüsselstation 4 im Schlüsselgerät 2 ein Zeitgeber 13 mit einem ersten Zeitwert gestartet.

Wird diese Zeit nicht eingehalten, kann beispielsweise eine Warnungsmeldung erfolgen, um die betreffende Person 17 zu suchen.

Gemäß Figur 1 wird beim Erreichen der Überprüfungsstation 9 der Zeitgeber 13 überprüft und falls der erste Zeitwert unterschritten ist, ein gültiges Erreichen der Überprüfungsstation 9 im Schlüsselgerät 2 signalisiert und gespeichert und falls der erste Zeitwert überschritten wird, ein nicht gültiges Erreichen der Überprüfungsstation 9 im Schlüsselgerät 2 signalisiert und gespeichert.

Ist die Zeit überschritten, kann die Anlage 8 nicht gestartet werden. Die Person 17 wird aufgefordert die Routine erneut zu starten. Die Person 17 entnimmt hierzu erneut das Schlüsselgerät 2 aus der Schlüsselstation 4, wobei erneut ein erster Zeitwert gesetzt wird. Die Person 17 muss die Überprüfungsstation 9 erneut innerhalb einer ersten Zeit aufsuchen.

Gemäß Figur 1 wird beim Erreichen der Überprüfungsstation 9 durch das Schlüsselgerät in dem Schlüsselgerät 2 ein Zeitgeber 13 mit einem zweiten Zeitwert gestartet.

Wird dieser zweite Zeitwert nicht eingehalten, kann beispielsweise eine Warnungsmeldung erfolgen, um die betreffende Person 17 zu suchen.

Gemäß Figur 1 wird beim Erreichen der Schlüsselstation 4 der zweite Zeitwert überprüft und falls der zweite Zeitwert unterschritten ist, ein gültiges Erreichen der Schlüsselstation 4 im Schlüsselgerät 2 signalisiert und gespeichert und falls der zweite Zeitwert überschritten wird, ein nicht gültiges Erreichen der Schlüsselstation 4 im Schlüsselgerät 2 signalisiert und gespeichert.

Ist die Zeit überschritten, kann die Anlage 8 nicht gestartet werden. Die Person 17 wird aufgefordert die Routine erneut zu starten. Die Person 17 entnimmt hierzu erneut das Schlüsselgerät 2 aus der Schlüsselstation 4, wobei erneut ein erster Zeitwert gesetzt wird. Die Person muss die Überprüfungsstation 9 erneut innerhalb des ersten Zeitwertes aufsuchen und die Schlüsselstation 4 innerhalb des zweiten Zeitwertes aufsuchen.

### Bezugszeichen:

1 Sicherheitssystem
2 mobiles Schlüsselgerät
3 Auswerteeinheit
4 Schlüsselstation
5 Aufnahme
6 Zugangsbereich
7 Zugangsstation
8 Anlage
9 Überprüfungsstation
10 Schnittstelle
11 RFID-Lesegerät
12 RFID-Transponder
13 Zeitgeber
14 Roboter
16 Sicherheitsbereich
17 Person

## Patentansprüche

1. Sicherheitssystem mit mindestens einer Überprüfungsstation, mit mindestens einem mobilen Schlüsselgerät (2) mit einer Auswerteeinheit (3) und einer Schlüsselstation (4) mit einer Aufnahme für das Schlüsselgerät (2),
wobei mindestens ein räumlich begrenzter Zugangsbereich (6) mit einer Zugangsstation (7) für eine Anlage (8) angeordnet ist, wobei die Überprüfungsstation ortsfest angeordnet ist, wobei das Schlüsselgerät (2) zum Lesen von Daten von mindestens der Überprüfungsstation (9) innerhalb eines Sicherheitsbereiches (16) der Anlage (8) ausgebildet ist, wobei die Daten Identifizierungsdaten für die Überprüfungsstation (9) umfassen und wobei das mobile Schlüsselgerät (2) eine Schnittstelle (10) aufweist, mittels der die Daten drahtlos von der Überprüfungsstation (9) zu dem Schlüsselgerät (2) übertragbar sind, wobei
die Überprüfungsstation (9) nur über den Zugangsbereich (6) zugänglich ist, so dass der Zugangsbereich (6) von einer Person (17) mit dem Schlüsselgerät (2) vor dem Erreichen der Überprüfungsstation (9) und nach dem Verlassen der Überprüfungsstation (9) passierbar ist, wobei die Daten des Schlüsselgeräts (2) an die Schlüsselstation (4) übertragbar sind,
wobei die Anlage (8) aktiviert ist, wenn das mindestens eine mobile Schlüsselgerät (2) in der Schlüsselstation (4) ist und die Anlage (8) deaktiviert ist, wenn mindestens ein Schlüsselgerät (2) von der Schlüsselstation (4) entfernt ist.

2. Sicherheitssystem nach Anspruch 1, **dadurch gekennzeichnet, dass** das Schlüsselgerät (2) mindestens ein RFID-Lesegerät (11) aufweist und die Überprüfungsstation (9) mindestens einen RFID-Transponder (12) aufweist.

3. Sicherheitssystem nach mindestens einem der vorhergehenden Ansprüche, **dadurch gekennzeichnet, dass** die Zugangsstation (7) des Zugangsbereichs (6) verriegelbar ist und nur mit dem Schlüsselgerät (2) passierbar ist.

4. Sicherheitssystem nach mindestens einem der vorhergehenden Ansprüche, **dadurch gekennzeichnet, dass** bei einer Entnahme des Schlüsselgeräts (2) aus der Schlüsselstation (4) im Schlüsselgerät (2) ein Zeitgeber (13) mit einem ersten Zeitwert gestartet ist.

5. Sicherheitssystem nach mindestens einem der vorhergehenden Ansprüche, **dadurch gekennzeichnet, dass** beim Erreichen der Überprüfungsstation (9) der Zeitgeber (13) überprüfbar ist und falls der erste Zeitwert unterschritten ist, ein gültiges Erreichen der Überprüfungsstation (9) signalisierbar ist und falls der erste Zeitwert überschritten wird, ein nicht gültiges Erreichen der Überprüfungsstation (9) signalisierbar ist.

6. Sicherheitssystem nach mindestens einem der vorhergehenden Ansprüche, **dadurch gekennzeichnet, dass** bei Erreichen der Überprüfungsstation (9) durch das Schlüsselgerät (2) in dem Schlüsselgerät (2) ein Zeitgeber (13) mit einem zweiten Zeitwert gestartet ist.

7. Sicherheitssystem nach mindestens einem der vorhergehenden Ansprüche, **dadurch gekennzeichnet, dass** beim Erreichen der Schlüsselstation (4) der Zeitgeber (13) überprüfbar ist und falls der zweite Zeitwert unterschritten ist, ein gültiges Erreichen der Schlüsselstation (4) signalisierbar ist und falls der zweite Zeitwert überschritten ist ein nicht gültiges Erreichen der Schlüsselstation (4) signalisierbar ist.

8. Verfahren mit einem Sicherheitssystem (1) mit mindestens einer Überprüfungsstation mit mindestens einem mobilen Schlüsselgerät (2) mit einer Auswerteeinheit (3) und einer Schlüsselstation (4) mit einer Aufnahme für das Schlüsselgerät (2),
wobei mindestens ein räumlich begrenzter Zugangsbereich (6) mit einer Zugangsstation (7) für eine Anlage (8) angeordnet ist, wobei die Überprüfungsstation ortsfest angeordnet ist, wobei das Schlüsselgerät (2) Daten von mindestens der Überprüfungsstation (9) innerhalb eines Sicherheitsbereiches (16) der Anlage (8) ausliest, wobei die Daten Identifizierungsdaten für die Überprüfungsstation (9) umfassen und wobei das mobile Schlüsselgerät (2) eine Schnittstelle (10) aufweist, mittels der die Daten drahtlos von der Überprüfungsstation (9) zu dem Schlüsselgerät (2) übertragen werden, wobei
die Überprüfungsstation (9) nur über den Zugangsbereich (6) zugänglich ist, so dass der Zugangsbereich (6) von einer Person (17) mit dem Schlüsselgerät (2) vor dem Erreichen der Überprüfungsstation (9) und nach dem Verlassen der Überprüfungsstation (9) passiert werden muss, wobei die Daten des Schlüsselgeräts (2) an die Schlüsselstation (4) übertragen werden,
wobei die Anlage (8) aktiviert wird, wenn das mindestens eine mobile Schlüsselgerät (2) in der Schlüsselstation (4) ist und die Anlage (8) deaktiviert wird, wenn mindestens ein Schlüsselgerät (2) von der Schlüsselstation (4) entfernt wird.

9. Verfahren nach Anspruch 8, **dadurch gekennzeichnet, dass** das Schlüsselgerät (2) mindestens ein RFID-Lesegerät (11) aufweist und ein RFID-Lesesignal aussendet und die Überprüfungsstation mindestens einen RFID-Transponder (12) aufweist, welcher auf das RFID-Lesesignal des RFID-Lesegerätes (11) antwortet.

10. Verfahren nach mindestens einem der vorhergehenden Ansprüche 8 bis 9, **dadurch gekennzeichnet, dass** die Zugangsstation (7) des Zugangsbereichs (6) verriegelt wird und nur mit dem Schlüsselgerät (2) passiert werden kann.

11. Verfahren nach mindestens einem der vorhergehenden Ansprüche 8 bis 10, **dadurch gekennzeichnet, dass** bei einer Entnahme des Schlüsselgeräts (2) aus der Schlüsselstation (4) im Schlüsselgerät (2) ein Zeitgeber (13) mit einem ersten Zeitwert gestartet wird.

12. Verfahren nach mindestens einem der vorhergehenden Ansprüche 8 bis 11, **dadurch gekennzeichnet, dass** beim Erreichen der Überprüfungsstation (9) der Zeitgeber (13) überprüft wird und falls der erste Zeitwert unterschritten ist, ein gültiges Erreichen der Überprüfungsstation (9) signalisiert wird und falls der erste Zeitwert überschritten wird, ein nicht gültiges Erreichen der Überprüfungsstation (9) signalisiert wird.

13. Verfahren nach mindestens einem der vorhergehenden Ansprüche 8 bis 12, **dadurch gekennzeichnet, dass** bei Erreichen der Überprüfungsstation (9) durch das Schlüsselgerät (2) in dem Schlüsselgerät (2) ein Zeitgeber (13) mit einem zweiten Zeitwert gestartet wird.

14. Verfahren nach mindestens einem der vorhergehenden Ansprüche 8 bis 13, **dadurch gekennzeichnet, dass** beim Erreichen der Schlüsselstation (4) der Zeitgeber (13) überprüft wird und falls der zweite Zeitwert unterschritten ist, ein gültiges Erreichen der Schlüsselstation (4) signalisiert wird und falls der zweite Zeitwert überschritten wird ein nicht gültiges Erreichen der Schlüsselstation (4) signalisiert wird.

## Claims

1. A safety system having at least one checking station, having at least one mobile key unit (2) with an evaluation unit (3) and having a key station (4) with a receiver for the key unit (2),
wherein at least one spatially bounded access zone (6) is arranged having an access station (7) for a facility (8);
wherein the checking station is arranged in a fixed position;
wherein the key unit (2) is configured for reading data from at least one checking station (9) within a safety zone (16) of the facility (8), with the data comprising identification data for the checking station (9), and with the mobile key unit (2) having an interface (10) by means of which the data can be wirelessly transmitted from the checking station (9) to the key unit (2); wherein the checking station (9) is only accessible via the access zone (6) such that the access zone (6) can only be passed through by a person (17) having the key unit (2) before reaching the checking station (9) and after leaving the checking station (9), with the data of the key unit (2) being able to be transmitted to the key station (4); and
wherein the facility (8) is activated when at least one mobile key unit (2) is in the key station (4) and the facility (8) is deactivated when at least one key unit (2) has been removed from the key station (4).

2. A safety system in accordance with claim 1, **characterized in that** the key unit (2) has at least one RFID reading device (11) and the checking station (9) has at least one RFID transponder (12).

3. A safety system in accordance with at least one of the preceding claims, **characterized in that** the access station (7) of the access zone (6) can be locked and can only be passed through with the key unit (2).

4. A safety system in accordance with at least one of the preceding claims, **characterized in that** a timer (13) is started with a first time value in the key unit (2) on a removal of the key unit (2) from the key station (4).

5. A safety system in accordance with at least one of the preceding claims, **characterized in that** the timer (13) can be checked on the reaching of the checking station (9) and if the first time value has not been reached, a valid reaching of the checking station (9) can be signaled and if the first time value is exceeded, an invalid reaching of the checking station (9) can be signaled.

6. A safety system in accordance with at least one of the preceding claims, **characterized in that** a timer (13) is started with a second time value in the key unit (2) on the reaching of the checking station (9) by the key unit (2).

7. A safety system in accordance with at least one of the preceding claims, **characterized in that** the timer (13) can be checked on the reaching of the key station (4) and if the second time value has not been reached, a valid reaching of the key station (4) can be signaled and if the second time value is exceeded, an invalid reaching of the key station (4) can be signaled.

8. A method using a safety system (1) having at least one checking station, having at least one mobile key unit (2) with an evaluation unit (3) and having a key station (4) with a receiver for the key unit (2),
wherein at least one spatially bounded access zone (6) is arranged having an access station (7) for a facility (8),
wherein the key unit (2) reads data from at least one checking station (9) within a safety zone (16) of the facility (8), with the data comprising identification data for the checking station (9), and with the mobile key unit (2) having an interface (10) by means of which the data are wirelessly transmitted from the checking station (9) to the key unit (2); wherein
the checking station (9) is only accessible via the access zone (6) so that the access zone (6) has to be passed through by a person (17) having the key unit (2) before reaching the checking station (9) and after leaving the checking station (9), with the data of the key unit (2) being transmitted to the key station (4); and
wherein the facility (8) is activated when at least one mobile key unit (2) is in the key station (4) and the facility (8) is deactivated when at least one key unit (2) has been removed from the key station (4).

9. A method in accordance with claim 8, **characterized in that** the key unit (2) has at least one RFID reading device (11) and transmits an RFID reading signal and the checking station has at least one RFID transponder (12) that responds to the RFID reading signal of the RFID reading device (11).

10. A method in accordance with at least one of the preceding claims 8 to 9, **characterized in that** the access station (7) of the access zone (6) is locked and can only be passed through with the key device (2).

11. A method in accordance with at least one of the preceding claims 8 to 10, **characterized in that** a timer (13) is started with a first time value in the key unit (2) on a removal of the key unit (2) from the key station (4).

12. A method in accordance with at least one of the preceding claims 8 to 11, **characterized in that** the timer (13) is checked on the reaching of the checking station (9) and if the first time value has not been reached, a valid reaching of the checking station (9) is signaled and if the first time value is exceeded, an invalid reaching of the checking station (9) is signaled.

13. A method in accordance with at least one of the preceding claims 8 to 12, **characterized in that** a timer (13) is started with a second time value in the key unit (2) on the reaching of the checking station (9) by the key unit (2).

14. A method in accordance with at least one of the preceding claims 8 to 13, **characterized in that** the timer (13) is checked on the reaching of the key station (4) and if the second time value has not been reached, a valid reaching of the key station (4) is signaled and if the second time value is exceeded, an invalid reaching of the key station (4) is signaled.

## Revendications

1. Système de sécurité comportant au moins une station de contrôle, au moins un appareil clé mobile (2) pourvu d'une unité d'évaluation (3), et une station clé (4) pourvue d'un logement pour l'appareil clé (2),
dans lequel il est prévu au moins une zone d'accès (6) limitée dans l'espace pourvue d'une station d'accès (7) pour une installation (8), la station de contrôle est agencée de façon stationnaire, l'appareil clé (2) est réalisé pour lire des données au moins de la station de contrôle (9) à l'intérieur d'une zone de sécurité (16) de l'installation (8), les données comprennent des données d'identification pour la station de contrôle (9), et l'appareil clé mobile (2) présente une interface (10) au moyen de laquelle les données peuvent être transférées sans fil depuis la station de contrôle (9) jusqu'à l'appareil clé (2), la station de contrôle (9) n'est accessible que via la zone d'accès (6), de sorte que la zone d'accès (6) est franchissable par une personne (17) ayant l'appareil clé (2) avant d'atteindre la station de contrôle (9) et après avoir quitté la station de contrôle (9), les données de l'appareil clé (2) pouvant être transférées vers la station clé (4),
l'installation (8) est activée lorsque ledit au moins un appareil clé mobile (2) est dans la station clé (4), et l'installation (8) est désactivée lorsqu'au moins un appareil clé (2) est enlevé de la station clé (4).

2. Système de sécurité selon la revendication 1, **caractérisé en ce que** l'appareil clé (2) comprend au moins un appareil de lecture RFID (11), et la station de contrôle (9) comprend au moins un transpondeur RFID (12).

3. Système de sécurité selon l'une au moins des revendications précédentes, **caractérisé en ce que** la station d'accès (7) de la zone d'accès (6) est verrouillable et n'est franchissable qu'avec l'appareil clé (2).

4. Système de sécurité selon l'une au moins des revendications précédentes, **caractérisé en ce que** lors d'un enlèvement de l'appareil clé (2) hors de la station clé (4), une minuterie (13) est démarrée avec une première valeur temporelle dans l'appareil clé (2).

5. Système de sécurité selon l'une au moins des revendications précédentes, **caractérisé en ce que** lorsque la station de contrôle (9) est atteinte, la minuterie (13) peut être contrôlée, et si on passe au-dessous de la première valeur temporelle, une atteinte valable de la station de contrôle (9) peut être signalée, et si on passe au-dessus de la première valeur temporelle, une atteinte non valable de la station de contrôle (9) peut être signalée.

6. Système de sécurité selon l'une au moins des revendications précédentes, **caractérisé en ce que** lorsque la station de contrôle (9) est atteinte par l'appareil clé (2), une minuterie (13) est démarrée avec une seconde valeur temporelle dans l'appareil clé (2).

7. Système de sécurité selon l'une au moins des revendications précédentes, **caractérisé en ce que** lorsque la station clé (4) est atteinte, la minuterie (13) peut être contrôlée, et si on passe au-dessous de la seconde valeur temporelle, une atteinte valable de la station clé (4) peut être signalée, et si on passe au-dessus de la seconde valeur temporelle, une atteinte non valable de la station clé (4) peut être signalée.

8. Procédé avec un système de sécurité (1), comportant au moins une station de contrôle, au moins un appareil clé mobile (2) pourvu d'une unité d'évaluation (3), et une station clé (4) pourvue d'un logement pour l'appareil clé (2),
dans lequel il est prévu au moins une zone d'accès (6) limitée dans l'espace pourvue d'une station d'accès (7) pour une installation (8),
la station de contrôle est agencée de façon stationnaire, l'appareil clé (2) lit des données au moins de la station de contrôle (9) à l'intérieur d'une zone de sécurité (16) de l'installation (8), les données comprennent des données d'identification pour la station de contrôle (9), et l'appareil clé mobile (2) présente une interface (10) au moyen de laquelle les données peuvent être transférées sans fil depuis la station de contrôle (9) jusqu'à l'appareil clé (2), la station de contrôle (9) n'est accessible que via la zone d'accès (6), de sorte que la zone d'accès (6) doit être franchie par une personne (17) ayant l'appareil clé (2) avant d'atteindre la station de contrôle (9) et après avoir quitté la station de contrôle (9), les données de l'appareil clé (2) étant transférées vers la station clé (4),
l'installation (8) est activée lorsque ledit au moins un appareil clé mobile (2) est dans la station clé (4), et l'installation (8) est désactivée lorsqu'au moins un appareil clé (2) est enlevé de la station clé (4).

9. Procédé selon la revendication 8, **caractérisé en ce que** l'appareil clé (2) comprend au moins un appareil de lecture RFID (11) et émet un signal de lecture RFID, et la station de contrôle (9) comprend au moins un transpondeur RFID (12) qui répond au signal de lecture RFID de l'appareil de lecture RFID (11).

10. Procédé selon l'une au moins des revendications précédentes 8 à 9, **caractérisé en ce que** la station d'accès (7) de la zone d'accès (6) est verrouillée et ne peut être franchie qu'avec l'appareil clé (2).

11. Procédé selon l'une au moins des revendications précédentes 8 à 10, **caractérisé en ce que** lors d'un enlèvement de l'appareil clé (2) hors de la station clé (4), une minuterie (13) est démarrée avec une première valeur temporelle dans l'appareil clé (2).

12. Procédé selon l'une au moins des revendications précédentes 8 à 11, **caractérisé en ce que** lorsque la station de contrôle (9) est atteinte, la minuterie (13) est contrôlée, et si on passe au-dessous de la première valeur temporelle, une atteinte valable de la station de contrôle (9) est signalée, et si on passe au-dessus de la première valeur temporelle, une atteinte non valable de la station de contrôle (9) est signalée.

13. Procédé selon l'une au moins des revendications précédentes 8 à 12, **caractérisé en ce que** lorsque la station de contrôle (9) est atteinte par l'appareil clé (2), une minuterie (13) est démarrée avec une seconde valeur temporelle dans l'appareil clé (2).

14. Procédé selon l'une au moins des revendications précédentes 8 à 13, **caractérisé en ce que** lorsque la station clé (4) est atteinte, la minuterie (13) est contrôlée, et si on passe au-dessous de la seconde valeur temporelle, une atteinte valable de la station clé (4) est signalée, et si on passe au-dessus de la seconde valeur temporelle, une atteinte non valable de la station clé (4) est signalée.
